# EUROPÄISCHE PATENTSCHRIFT

(11) **EP 3 690 302 B1**
(45) Veröffentlichungstag und Bekanntmachung des Hinweises auf die Patenterteilung: **04.05.2022**
(21) Anmeldenummer: 20152330.5
(22) Anmeldetag: 17.01.2020
(51) Int. Cl.: F16P 3/14

(54) **VERBESSERTES ZUGANGSABSICHERUNGSSYSTEM ZUM ABSICHERN EINER MASCHINE ODER ANLAGE**
IMPROVED ACCESS CONTROL SYSTEM FOR SECURING A MACHINE OR SYSTEM
SYSTÈME AMÉLIORÉ DE SÉCURISATION D'ACCÈS PERMETTANT DE SÉCURISER UNE MACHINE OU UNE INSTALLATION

(30) Priorität: 28.01.2019 DE 102019102004
(43) Veröffentlichungstag der Anmeldung: 05.08.2020
(73) Patentinhaber: Pilz GmbH & Co. KG, 73760 Ostfildern (DE)
(72) Erfinder: Yumuk, Sezgin, 73760 Ostfildern (DE)
(74) Vertreter: Witte, Weller & Partner Patentanwälte mbB

(56) Entgegenhaltungen:
- DE-C1- 4 318 518
- JP-A- 2000 199 599
- JP-B2- 3 929 156

## Beschreibung

Die vorliegende Erfindung betrifft ein Zugangsabsicherungssystem und ein Verfahren zum Absichern eines Zugangs zu einer in einem Sicherheitsbereich angeordneten Maschine oder Anlage. Das Zugangsabsicherungssystem weist eine Sensoreinrichtung und eine Steuerungseinrichtung auf. Die Sensoreinrichtung weist einen optischen Sender und einen optischen Empfänger auf. Der optische Sender ist dazu eingerichtet, einen Lichtimpuls zum optischen Empfänger zu senden. Die Sensoreinrichtung ist dazu ausgebildet, basierend auf dem Empfang der Lichtimpulse durch den Empfänger ein Sensorsignal zu erzeugen. Die Steuerungseinrichtung ist dazu ausgebildet, das Sensorsignal auszulesen und die in dem Sicherheitsbereich angeordnete Maschine oder Anlage unter Berücksichtigung des Sensorsignals zu steuern.

Derartige Zugangsabsicherungssysteme und Verfahren sind aus dem Stand der Technik allgemein bekannt.

Beispielsweise zeigt die Druckschrift DE 10 2012 111 433 A1 eine optoelektronische Schutzeinrichtung zum Absichern einer Gefahrenstelle, mit einem optischen Sender und einem optischen Empfänger, die in einem räumlichen Abstand voneinander angeordnet sind.

Grundsätzlich ist es bekannt, Lichtgitter zur Zugangssicherung von Gefahrenbereichen bzw. Sicherheitsbereichen zu verwenden. Insbesondere werden sie als nicht trennende Schutzeinrichtungen an Zugängen von Gefahrenstellen eingesetzt. Sobald eine Person oder ein Objekt im Detektionsbereich des Lichtgitters erfasst wird bzw. das Schutzfeld unterbricht, wird dies vom Lichtgitter "gemeldet", bspw. indem OSSD-Ausgänge am Lichtgitter abgeschaltet werden.

Nach Verlassen des Schutzfeldes bspw. Herauslaufen aus dem Schutzfeld und hineinlaufen in den Gefahrenbereich, muss die Anlage weiterhin im sicheren Zustand (AUS) bleiben. Dies kann durch eine softwaretechnische Verriegelung im Lichtgitter oder in der Sicherheitssteuerung gesehen. Ein Wiederanlauf ist dann nur möglich, wenn ein Reset-Signal oder Restart-Signal explizit bereitgestellt wird. Wichtig ist dabei, dass ein Restart-Button zum Bereitstellen des Reset-Signals so angeordnet ist, dass der Gefahrenbereich einsehbar ist und ein Bediener sicherstellen kann, dass die Anlage wieder gefahrlos anlaufen kann.

In der Praxis besteht das Problem, dass der Restart-Button zum Wiederanlauf der Anlage in einem unerlaubten Fall betätigt werden kann. Insbesondere besteht dieses Problem in dem Fall, wenn ein Sonderbetriebsfall der Anlage, insbesondere eine Wartung, eine Reparatur, eine Inbetriebnahme oder eine Justage der Anlage, vorliegt. Beispielsweise kann im Sonderbetrieb eine zweite Person den Restart-Button betätigen, während eine erste Person noch im Gefahrenbereich ist und durch Teile der Anlage verdeckt und von außen nicht sichtbar ist. Beispielsweise könnte sich die erste Person zur Reparatur oder Wartungszwecken auf dem Boden oder in der Maschine befinden.

Ebenso ist es möglich, dass die erste Person sich nicht mehr im Gefahrenbereich aufhält, zwischenzeitlich aber eine weitere Person den Gefahrenbereich betreten hat, um den Anwender zu suchen, wobei der Wiederanlauf der Anlage von einer dritten Person oder von der ersten Person gestartet wird.

Im Stand der Technik sind Lösungen des zuvor beschriebenen Problems bekannt. Diese Lösungen schlagen vor, zusätzlichen Mittel bereitzustellen, um eine Personen im Gefahrenbereich detektieren zu können. Beispielsweise können separate berührungslos wirkende Schutzeinrichtungen verwendet werden. Hierzu zählen insbesondere Lichtgitter in waagerechter bzw. horizontaler Ausrichtung, Scanner im Gefahrenbereich, zusätzliche Trittmatten oder ein sicheres Kamerasystem. Die JP 2000 199599 A und die DE 43 18 518 C1 offenbaren weitere aus dem Stand der Technik bekannten Verriegelungseinrichtungen. Die JP 3 929 156 B2 offenbart eine weitere Verriegelungseinrichtung gemäß dem Oberbegriff der Ansprüche 1 und 15.

Vor diesem Hintergrund ist es eine Aufgabe der vorliegenden Erfindung, eine Verriegelungseinrichtung und Verfahren mit erweiterten Sicherheitsfunktionen und einem erhöhten Manipulationsschutz bereitzustellen. Insbesondere ist es eine Aufgabe der vorliegenden Erfindung, eine Verriegelungseinrichtung und Verfahren bereitzustellen, dass weiterhin hohe Sicherheit gewährleistet, geringeren Programmier und Verdrahtungsaufwand benötigt, kostengünstig und ökologisch bei der Herstellung und Anwendung ist und eine einfache Integration sowie Handhabung ermöglicht.

Gemäß der vorliegenden Erfindung Z weist die eingangs beschriebene Verriegelungseinrichtung einen Grundkörper und ein daran angeordnetes Blockierelement auf. Das Blockierelement ist gegenüber dem Grundkörper aus einer Freigabestellung in eine Sperrstellung bringbar, in der das Blockierelement in einem Strahlengang des Lichtimpulses zwischen dem Sender und dem Empfänger angeordnet ist, um den Empfang des Lichtimpulses zu blockieren. Die Verriegelungseinrichtung ist mittels eines Sicherungselements in der Sperrstellung versperrbar.

Gemäß der vorliegenden Erfindung wird eine Verriegelungseinrichtung vorgeschlagen für eine Sensorvorrichtung, welche einen Zugang zu einer in einem Sicherheitsbereich angeordneten Maschine oder Anlage überwacht und einen optischen Sender und einen optischen Empfänger besitzt, welche durch Austausch von Lichtimpulsen in Wechselwirkung miteinander bringbar sind und dadurch ein Sensorsignal erzeugen, wobei die Verriegelungseinrichtung einen Grundkörper und ein daran angeordnetes Blockierelement aufweist, wobei das Blockierelement gegenüber dem Grundkörper aus einer Freigabestellung in eine Sperrstellung bringbar ist, in der das Blockierelement in einem Strahlengang der Lichtimpulse zwischen dem Sender und dem Empfänger angeordnet ist und deren Wechselwirkung verhindert, und wobei die Verriegelungseinrichtung mittels eines Sicherungselements in der Sperrstellung versperrbar ist, wobei die Verriegelungseinrichtung eine Aufnahme für das abschließbare Sicherungselement aufweist und das Sicherungselement, in die Aufnahme eingeführt, das Blockierelement in seiner Sperrstellung hält.

Gemäß der vorliegenden Erfindung wird ein Verfahren zum Absichern eines Zugangs zu einer in einem Sicherheitsbereich angeordneten Maschine oder Anlage vorgeschlagen. Das Verfahren weist die folgenden Schritte auf:
- Bereitstellen einer Sensoreinrichtung, wobei die Sensoreinrichtung einen optischen Sender und einen optischen Empfänger aufweist;
- Senden eines Lichtimpulses von dem optischen Sender zu dem optischen Empfänger;
- Erzeugen eines Sensorsignals mittels der Sensoreinrichtung basierend auf dem Empfang des Lichtimpulses durch den Empfänger;
- Auslesen des Sensorsignals mittels einer Steuerungseinrichtung;
- Steuern der in dem Sicherheitsbereich angeordnete Maschine oder Anlage mittels der Steuerungseinrichtung unter Berücksichtigung des Sensorsignals;
- Bereitstellen einer Verriegelungseinrichtung mit einem Grundkörper und einem daran angeordneten Blockierelement;
- Anordnen des Blockierelements in einer Freigabestellung, in der das Blockierelement außerhalb eines Strahlengangs des Lichtimpulses zwischen dem Sender und dem Empfänger angeordnet ist;
- Überführen des Blockierelements von der Freigabestellung in eine Sperrstellung, in der das Blockierelement in einem Strahlengang des Lichtimpulses zwischen dem Sender und dem Empfänger angeordnet ist, um den Empfang des Lichtimpulses zu blockieren; und
- Versperren der Verriegelungseinrichtung in der Sperrstellung mittels eines Sicherungselements, wobei die Verriegelungseinrichtung eine Aufnahme für das abschließbare Sicherungselement aufweist und das Sicherungselement, in die Aufnahme eingeführt, das Blockierelement in seiner Sperrstellung hält.

Der Begriff "Sicherheitsbereich" ist als der Bereich zu verstehen, der die Anlage bzw. Maschine umgibt und der durch die Sensoreinrichtung abgesichert ist. Der Sicherheitsbereich kann ein Gefahrenbereich sein, in dem sich Personen während des Betriebs der Maschine bzw. Anlage nicht aufhalten dürfen, da die Maschine bzw. Anlage aufgrund ihres automatischen Betriebs eine Gefahr für Personen darstellt, die sich in dem Gefahrenbereich aufhalten.

Der Sicherheitsbereich kann beispielsweise als ein im Wesentlichen abgeschlossener Bereich verstanden werden, der nur über einen Zugang zugänglich ist. In diesem Zugang kann die Sensoreinrichtung zum Zwecke der Zugangskontrolle angeordnet sein. Der Sicherheitsbereich kann auch zwei oder mehr Zugänge aufweisen, wobei jeder Zugang separat abgesichert sein kann. Beispielsweise kann für jeden Zugang eine Sensoreinrichtung vorgesehen sein.

Die Sensoreinrichtung kann über den Empfang des Lichtimpulses an dem Empfänger erkennen, ob sich eine Person oder ein Gegenstand in dem Zugang zu dem Sicherheitsbereich befindet bzw. den Zugang passiert. Wenn sich eine Person oder ein Gegenstand in dem Zugang befinden, wird der Empfang des Lichtimpulses blockiert, d.h. der Lichtimpuls erreicht den Empfänger nicht. Dadurch kann die Sensoreinrichtung bestimmen, ob eine Person oder ein Gegenstand in dem Zugang befindet. Der erzeugte Lichtimpuls propagiert entlang eines Strahlengangs von dem Sender zu dem Empfänger. In anderen Worten bilden der Lichtimpuls entlang des Strahlengangs einen Lichtstrahl aus. Die Sensoreinrichtung kann auch dazu ausgebildet sein mehrere Lichtimpulse sequentiell, d.h. zeitlich versetzt bzw. in zeitlichen Intervallen, hintereinander zu senden.

Die Sensoreinrichtung erzeugt das Sensorsignal basierend auf dem Empfang des Lichtimpulses. Das Sensorsignal kann beispielsweise eine Information darüber enthalten, ob der Empfänger einen gesendeten Lichtimpuls empfangen oder nicht empfangen hat. Das Sensorsignal kann auch eine Information darüber enthalten, ob eine Person oder ein Gegenstand in dem Zugang erkannt wurden.

Der vorliegenden Erfindung liegt die Idee zugrunde eine zusätzliche Verriegelungseinrichtung vorzusehen, mittels der der Sicherheitsbereich, insbesondere im Fall eines Sonderbetriebs der Maschine bzw. Anlage, abgesichert werden kann. Insbesondere kann vorgesehen sein, dass die Verriegelungseinrichtung den Sicherheitsbereich über die komplette Dauer eines Sonderbetriebs der Maschine bzw. Anlage absichert. Die Verriegelungseinrichtung weist dazu ein Blockiererelement auf. Das Blockierelement kann in einen Strahlengang des Lichtimpulses zwischen Sender und Empfänger eingebracht werden, um einen Empfang des Lichtimpulses zu blockieren. Dadurch kann ein unbefugtes Starten oder ein selbständiges Anlaufen der Maschine bzw. Anlage, beispielsweise während eines Sonderbetriebsfalls, verhindert werden.

Das Blockierelement ist zum Absichern der Maschine bzw. Anlage aus der Freigabestellung in die Sperrstellung bringbar. In der Freigabestellung ist das Blockierelement außerhalb des Strahlengangs des Lichtimpulses angeordnet. In der Sperrstellung ist das Blockiererelement innerhalb des Strahlengangs des Lichtimpulses angeordnet. Der Begriff "bringbar" bedeutet hierbei, dass die Position bzw. die Ausrichtung des Blockierelements relativ zu dem Grundkörper veränderbar ist. Beispielsweise kann das Blockierelement relativ zu dem Grundkörper gedreht und/oder verschoben werden. Es kann insbesondere vorgesehen sein, dass das Blockierelement um eine Drehachse gedreht wird bzw. entlang einer Schiene verschoben wird. Beispielsweise kann der Grundkörper die Drehachse definieren und/oder die Schiene an diesem ausgebildet sein.

Zusätzlich ist die Verriegelungseinrichtung mittels des Sicherungselements in der Sperrstellung versperrbar. Der Begriff "versperrbar" ist dahingehend zu verstehen, dass Mittel vorgesehen sind, die ein Überführen des Blockierelements aus der Sperrstellung heraus verhindern. Der Begriff "versperrbar" kann insbesondere verriegelbar bedeuten. Beispielsweise kann ein Vorhängeschloss als Mittel zum Sperren vorgesehen sein. Das Vorhängeschloss sperrt bzw. verriegelt das Blockierelement in seiner Sperrstellung.

Durch ein Versperren der Verriegelungseinrichtung mittels des Sicherungselements wird erreicht, dass das Blockierelement nicht aus der Sperrstellung in die Freigabestellung bringbar ist, ohne die durch das Sicherungselement vorgesehene Versperrung zu lösen. In anderen Worten muss ein Anwender eine bewusste Handlung durchführen, um den Wiederanlauf der Maschine bzw. Anlage freizugeben. Dadurch wird beispielsweise verhindert, dass ein Dritter unabsichtlich den Wiederanlauf der Maschine bzw. Anlage starten kann, solange sich ein Anwender während eines Sonderbetriebs im Sicherheitsbereich aufhält. Die mechanische Ausgestaltung erschwert zudem eine Manipulation der Blockiereinrichtung.

Mittels der erfindungsgemäßen Ausgestaltung wird eine kostengünstige und einfache Alternative zu den in dem Stand der Technik vorgeschlagenen Schutzeinrichtungen geschaffen. Da die Verriegelungseinrichtung rein mechanisch operiert, ist kein zusätzlicher Programmieraufwand bzw. Verdrahtungsaufwand erforderlich, wobei weiterhin ein hohes Sicherheitslevel und ein hoher Manipulationsschutz gewährleistet sind.

Die Verriegelungseinrichtung ist ökologisch bei der Herstellung und Anwendung. Des Weiteren ist die Verriegelungseinrichtung einfach, insbesondere in bestehende Systeme, zu integrieren, sowie einfach in der Handhabung.

Die eingangs gestellte Aufgabe wird somit vollumfänglich gelöst.

In einer ersten Ausgestaltung der vorliegenden Erfindung kann vorgesehen sein, dass das Blockierelement gegenüber dem Grundkörper aus der Freigabestellung in die Sperrstellung in einer Drehrichtung um eine Schwenkachse mechanisch verschwenkbar ist.

Grundsätzlich ist es auch denkbar, dass das Blockierelement statt durch ein Verschwenken durch eine lineare Verschiebung von der Freigabestellung in die Sperrstellung gebracht wird. Sowohl ein Verschieben als auch ein Verschwenken des Blockierelements kann entweder automatisch per Knopfdruck, beispielsweise mithilfe eines Elektromotors, aber auch mechanisch von Hand erfolgen. Eine mechanische Verschwenkbarkeit von Hand ist eine einfache und kostengünstige Lösung. Vorzugsweise wird das Blockierelement um 90° verschwenkt, um diesen aus der Freigabestellung in seine Sperrstellung zu bringen bzw. umgekehrt. Die Längsrichtung des Blockierelements schließt mit selbiger in der Sperrstellung im Vergleich zur Freigabestellung also einen Winkel von vorzugsweise 90° ein.

In einer weiteren Ausgestaltung der vorliegenden Erfindung kann vorgesehen sein, dass die Schwenkachse parallel oder senkrecht zu dem Strahlengang des Lichtimpulses angeordnet ist.

Ist die Schwenkachse parallel zu dem Strahlengang des Lichtimpulses angeordnet, wird das Blockierelement um die Schwenkachse in den Strahlengang des Lichtimpulses hineingedreht. Vorzugsweise erstreckt sich hierbei die Schwenkachse von dem Grundkörper weg. Ist die Schwenkachse senkrecht zu dem Strahlengang des Lichtimpulses angeordnet, wird das Blockierelement um die Schwenkachse in den Strahlengang des Lichtimpulses geklappt. Die Schwenkachse ist hierbei vorzugsweise parallel zu bzw. entlang dem Grundkörper angeordnet. Die Wahl der Anordnung der Schwenkachse hängt im konkreten Anwendungsfall von dem zur Verfügung stehenden Bauraum ab, da sich das Blockierelement in der Freigabestellung von dem Grundkörper je nach Anordnung der Schwenkachse in unterschiedliche Richtungen erstreckt.

In einer weiteren Ausgestaltung der vorliegenden Erfindung kann vorgesehen sein, dass das Sicherungselement dazu ausgebildet ist, den Grundkörper und das Blockierelement in der Sperrstellung in der Drehrichtung drehfest miteinander zu verbinden.

Dadurch wird verhindert, dass das Blockierelement gegenüber dem Grundkörper aus der Sperrstellung bewegbar ist.

In einer weiteren Ausgestaltung der vorliegenden Erfindung kann vorgesehen sein, dass an dem Blockierelement ein Haltegriff zum Verschwenken des Blockierelements um die Schwenkachse von Hand vorgesehen ist, insbesondere wobei der Haltegriff im Wesentlichen parallel zu der Schwenkachse, insbesondere im Wesentlichen entlang der Schwenkachse, verläuft.

Mithilfe dieses Haltegriffs lässt sich das Blockierelement relativ einfach verdrehen bzw. verschwenken. Für eine einfache und angenehme Handhabung kann dieser Haltegriff auch ergonomisch geformt sein. Durch die Anbringung des Haltegriffs entlang der Schwenkachse des Verriegelungshebels lässt sich die zum Verschwenken bzw. Verdrehen erforderliche Kraft sehr leicht auf das Blockierelement übertragen. Das Blockierelement selbst ist dabei vorzugsweise plattenförmig ausgestaltet, so dass sich dieses in der Sperrstellung möglichst großflächig in dem Strahlengang des Lichtimpulses zwischen dem Sender und dem Empfänger anordnen lässt.

In einer weiteren Ausgestaltung der vorliegenden Erfindung kann vorgesehen sein, dass das Blockierelement über ein entlang der Schwenkachse angeordnetes Federelement mit dem Grundkörper gekoppelt ist, welches in der Freigabestellung und/oder in der Sperrstellung eine Federkraft ausübt, die das Blockierelement gegen den Grundkörper drückt.

Als Federelement kann beispielsweise eine mechanische Druckfeder verwendet werden. Grundsätzlich wäre jedoch auch ein pneumatisches oder hydraulisches Federelement denkbar. Die von dem Federelement auf das Blockierelement ausgeübte Federkraft hat im Wesentlichen den Zweck, ein unabsichtliches Lösen des Blockierelements aus seiner Freigabestellung und/oder aus seiner Sperrstellung zu verhindern. Sie drückt das Blockierelement gegen den Grundkörper der Verriegelungseinrichtung. Um das Blockierelement aus der Sperrstellung in die Freigabestellung oder umgekehrt verschwenken zu können, muss der Bediener das Blockierelement also zunächst entgegen der Wirkung der Federkraft leicht anheben. Die von dem Federelement ausgeübte Federkraft sollte daher nicht allzu groß sein.

In einer weiteren Ausgestaltung der vorliegenden Erfindung kann vorgesehen sein, dass das Blockierelement in der Freigabestellung und/oder in der Sperrstellung mit dem Grundkörper verrastbar ist.

Vorzugsweise ist das Blockierelement sowohl in der Freigabestellung als auch in der Sperrstellung mit dem Grundkörper verrastbar. Eine solche Verrastbarkeit des Blockierelements bietet zusätzlich zu dem oben genannten Federelement Schutz gegen ein unbeabsichtigtes Verschwenken des Blockierelements aus der Sperrstellung oder der Freigabestellung heraus. Die Positionen des Blockierelements in der Freigabestellung und der Sperrstellung sind dadurch auch exakt definiert. Dies vereinfacht die Handhabung für den Bediener.

In einer weiteren Ausgestaltung der vorliegenden Erfindung kann vorgesehen sein, dass an dem Grundkörper eine erste und eine zweite Ausnehmung vorgesehen sind, wobei das Blockierelement in der Freigabestellung durch Anordnung in der ersten Ausnehmung verrastet und in der Sperrstellung durch Anordnung in der zweiten Ausnehmung verrastet.

Diese Ausnehmungen ermöglichen eine mechanisch einfache und dennoch stabile Verrastbarkeit des Blockierelements. Insbesondere in Kombination mit dem oben bereits erwähnten Federelement wird das Blockierelement somit nämlich bei Erreichen der Sperrstellung bzw. der Freigabestellung quasi automatisch aufgrund der Federkraft in die jeweilige Ausnehmung hineingezogen. Ein Lösen dieser Verrastung lässt sich dann wiederum durch Anheben des Blockierelements entgegen der Federkraft erreichen. Die beiden im Grundkörper vorgesehenen Ausnehmungen sind vorzugsweise orthogonal zueinander angeordnet.

Das Sicherungselement ist abschließbar.

Vorzugsweise ist das Sicherungselement hierbei als Vorhängeschloss ausgebildet. Ein Bügel des Vorhängeschlosses kann dann durch die Aufnahme des Blockierelements geführt werden, um das Blockierlement in der Sperrstellung zu versperren.

Ein als abschließbares Sicherungselement verwendetes Vorhängeschloss lässt sich direkt in die im Blockierelement vorgesehene Bohrung einsetzen. Vorzugsweise ist die Bohrung nur zugänglich, wenn sich das Blockierelement in der Sperrstellung befindet. Ein Vorhängeschloss lässt sich also nur dann an der Verriegelungseinrichtung befestigen, wenn das Blockierelement in der Sperrstellung ist. Die Position der Bohrung sollte im Übrigen auch so gewählt sein, dass sich das Blockierelement bei einem in die Bohrung eingesetzten Vorhängeschloss nicht mehr aus der Sperrstellung in die Freigabestellung bewegen bzw. verschwenken lässt. Dies wird dadurch verhindert, dass das Vorhängeschloss bei einem Versuch, den Hebel zu verschwenken, mit dem Grundkörper der Verriegelungseinrichtung kollidiert. Die genannte Bohrung ist dazu vorzugsweise im Bereich eines Endes des plattenförmigen Blockierelements angeordnet.

In einer weiteren Ausgestaltung der vorliegenden Erfindung kann vorgesehen sein, dass an dem Grundkörper eine Aussparung vorgesehen ist, welche in der Sperrstellung des Blockierelements mit der in dem Blockierelement vorgesehenen Bohrung zumindest teilweise fluchtet.

Diese Aussparung kann entweder als eine Bohrung oder als eine Art Einkerbung im Grundkörper vorgesehen sein. Dadurch, dass diese Aussparung in der Sperrstellung des Blockierelements mit der in dem Blockierelement vorgesehenen Bohrung fluchtet, entsteht bei einem Einsetzen eines Vorhängeschlosses in die Bohrung eine Art Formschluss zwischen dem Bügel des Vorhängeschlosses und der Bohrung des Blockierelements als auch der Aussparung am Grundkörper. Das Vorhängeschloss wird in der Sperrstellung des Blockierelements also nicht nur in die Bohrung des Blockierelements, sondern auch in die Aussparung des Grundkörpers eingesetzt. Liegen Bohrung und Aussparung in der Sperrstellung exakt übereinander, so ist ein Verschwenken des Blockierelements bei eingesetztem Vorhängeschloss nicht mehr möglich, ohne das Vorhängeschloss oder die Verriegelungseinrichtung zu zerstören. Die zusätzliche Sicherung durch die Verriegelungseinrichtung lässt sich somit nicht ungewollt manipulieren.

In einer weiteren Ausgestaltung der vorliegenden Erfindung kann vorgesehen sein, dass in dem Blockierelement zwei Bohrungen als Aufnahme für jeweils ein abschließbares Sicherungselement vorgesehen sind und an dem Grundkörper zwei Aussparungen vorgesehen sind, welche in der Sperrstellung des Blockierelements mit den in dem Blockierelement vorgesehenen Bohrungen zumindest teilweise fluchten, wobei die Sicherungselemente, in die jeweilige Aufnahme eingeführt, das Blockierelement in seiner Sperrstellung halten.

Gemäß dieser Ausgestaltung weist der Verriegelungshebel sozusagen zwei Steckplätze für jeweils ein Vorhängeschloss auf. Eine solche Ausgestaltung ist insbesondere bei mehreren Bedienern der Maschine oder Anlage von Vorteil. Ein erster Bediener sichert beim Betreten des Sicherheitsbereichs das Zugangsabsicherungssystem durch ein erstes Vorhängeschloss ab. Falls dann eine zweite Person den Sicherheitsbereich betritt, kann auch diese das Blockierelement in der Sperrstellung absichern, indem ein zweites Vorhängeschloss in die zweite Bohrung des Blockierelements eingeführt bzw. eingehängt wird. Sollte der erste Bediener dann den Sicherheitsbereich wieder verlassen, so erkennt dieser aufgrund des zweiten Vorhängeschlosses sofort, dass sich noch eine weitere Person im Sicherheitsbereich befindet. Die beiden Bediener können daher nur gemeinsam das Blockierelement wieder in seine Freigabestellung bringen, indem beide Vorhängeschlösser von dem Blockierelement gelöst werden. Somit wäre es auch bei zwei Bedienern gesichert, dass sich keiner der beiden im Sicherheitsbereich befindet, wenn die Maschine bzw. Anlage wieder in Betrieb genommen wird. Es versteht sich, dass je nach Anzahl der potentiellen Bediener natürlich auch mehr als zwei Bohrungen bzw. Aufnahmen für Vorhängeschlösser an der Verriegelungseinrichtung vorgesehen sein können.

In einer weiteren Ausgestaltung der vorliegenden Erfindung kann vorgesehen sein, dass der Grundkörper an dem Sender oder an dem Empfänger angeordnet ist, insbesondere wobei der Grundkörper mit dem Sender oder dem Empfänger starr verbindbar ist.

Mit anderen Worten ist der Grundkörper somit senderseitig oder empfängerseitig angeordnet. Durch die starre Verbindung mit dem Sender oder dem Empfänger ist das Blockierelement insbesondere relativ zu dem Sender bzw. Empfänger, sprich relativ zu dem Strahlengang des Lichtimpulses, bewegbar. Vorzugsweise sind der Sender und/oder der Empfänger an gegenüberliegenden Seiten des Zugangs angeordnet. Hierbei kann vorgesehen sein, dass an den Seiten des Zugangs jeweils eine Leiste angebracht ist, wobei der Sender und der Empfänger jeweils in einer der Leisten angeordnet sind. Der Grundkörper der Verriegelungseinrichtung kann entweder direkt oder über ein Kupplungselement an einer der Leisten montiert sein.

In einer weiteren Ausgestaltung der vorliegenden Erfindung kann vorgesehen sein, dass die Sensoreinrichtung eine Vielzahl von optischen Sendern und korrespondierenden optischen Empfängern aufweist, wobei das Blockierelement in seiner Sperrstellung in mindestens zwei Strahlengängen der Lichtimpulse zwischen den Sendern und den Empfängern angeordnet ist.

Die Vielzahl der Sender und Empfänger sind zur besseren Absicherung des Zugangs gegen ein Betreten des Sicherheitsbereiches vorgesehen. Das Blockieren zweier Strahlengänge hat den Vorteil, dass im Falle eines Fehlers eine redundante Absicherung geschaffen ist. Beispielsweise könnte ein blockierter Empfänger fälschlicherweise ein Lichtsignal detektieren, obwohl das Blockierelement einen dazu entsprechenden Strahlengang blockiert. Des Weiteren könnte ein blockierter Empfänger auch auf Grund eines Defekts oder einer Manipulation ein falsches Signal an die Steuereinrichtung übermitteln.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen der Erfindung sind in der Zeichnung dargestellt und werden in der nachfolgenden Beschreibung näher erläutert. Es zeigen:
Fig. 1 eine schematische Ansicht einer ersten Ausführungsform eines Zugangsabsicherungssystems;
Fig. 2 eine Detailansicht des Zugangsabsicherungssystems aus Fig. 1;
Fig. 3 eine schematische Ansicht eines ersten Teils einer Ausführungsform eines Verfahrens zum Absichern einer in einem Sicherheitsbereich angeordneten Maschine oder Anlage;
Fig. 4 eine schematische Ansicht eines zweiten Teils des Verfahrens aus Fig. 3;
Fig. 5 eine perspektivische Ansicht einer zweiten Ausführungsform eines Zugangsabsicherungssystems in der Freigabestellung;
Fig. 6 eine perspektivische Ansicht des Zugangsabsicherungssystems aus Fig. 5 in der Sperrstellung;
Fig. 7 eine erste Seitenansicht des Zugangsabsicherungssystems aus Fig. 5;
Fig. 8 eine zweite Seitenansicht des Zugangsabsicherungssystems aus Fig. 5;
Fig. 9 eine Vorderansicht des Zugangsabsicherungssystems aus Fig. 5;
Fig. 10 eine Draufsicht des Zugangsabsicherungssystems aus Fig. 5;
Fig. 11 eine Rückansicht des Zugangsabsicherungssystems aus Fig. 5;
Fig. 12 eine erste Seitenansicht des Zugangsabsicherungssystems aus Fig. 6;
Fig. 13 eine zweite Seitenansicht des Zugangsabsicherungssystems aus Fig. 6;
Fig. 14 eine Vorderansicht des Zugangsabsicherungssystems aus Fig. 6;
Fig. 15 eine Draufsicht des Zugangsabsicherungssystems aus Fig. 6;
Fig. 16 eine Rückansicht des Zugangsabsicherungssystems aus Fig. 6; und
Fig. 17 eine perspektivische Ansicht einer dritten Ausführungsform eines Zugangsabsicherungssystems.

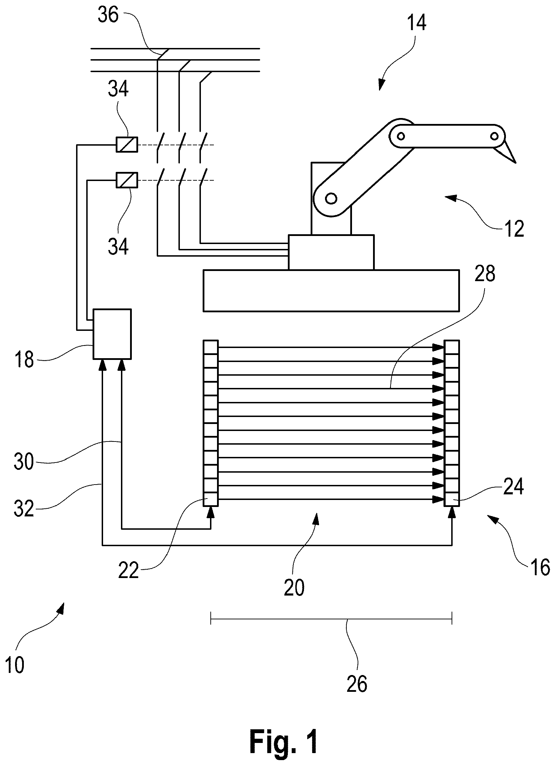

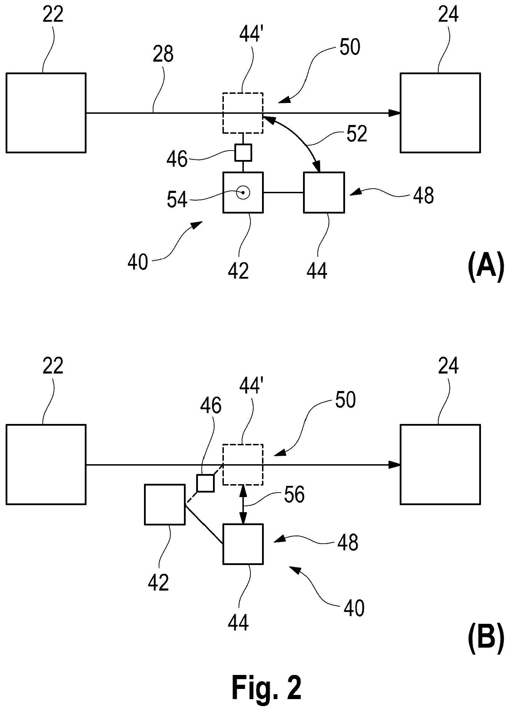

Die Figuren 1 und 2 zeigen eine erste Ausführungsform eines Zugangsabsicherungssystems 10. In Fig. 1 ist hierbei der grundsätzliche Aufbau des Zugangsabsicherungssystems 10 dargestellt. Fig. 2 zeigt eine Detailansicht des Zugangsabsicherungssystems 10, in der einen Verriegelungsmechanismus zur zusätzlichen Absicherung des Zugangsabsicherungssystems 10 dargestellt ist.

Das Zugangsabsicherungssystem 10 ist zum Absichern einer in einem Sicherheitsbereich 12 angeordneten Anlage oder Maschine 14 vorgesehen. Ein Zugang 20 des Sicherheitsbereichs 12 wird durch das Zugangsabsicherungssystem 10 überwacht. Betritt eine Person den Sicherheitsbereich 12, wird dies mit Hilfe des Zugangsabsicherungssystems 10 erkannt und die in dem Sicherheitsbereich 12 angeordneten Anlage oder Maschine 14 wird in einen gefahrlosen Zustand für die Person überführt. Beispielsweise kann die Anlage oder Maschine 14 abgeschaltet werden, insbesondere durch Unterbrechung der Stromzufuhr.

Das Zugangsabsicherungssystem 10 weist eine Sensoreinrichtung 16 auf. Die Sensoreinrichtung 16 ist an dem Zugang 20 zu dem Sicherheitsbereich 12 angeordnet. Die Sensoreinrichtung 16 weist einen optischen Sender 22 und einen optischen Empfänger 24 auf. Der optische Sender 22 und der optische Empfänger 24 sind in einem räumlichen Abstand 26 voneinander angeordnet. Vorzugsweise sind der Sender 22 und der Empfänger 24 an gegenüberliegenden Seiten des Zugangs 20 angeordnet. Der optische Sender 22 erzeugt einen Lichtimpuls und sendet diesen entlang eines Strahlengangs 28 zu dem optischen Empfänger 24. In anderen Worten bilden der Lichtimpuls entlang des Strahlengangs 28 einen Lichtstrahl aus. Die Sensoreinrichtung 16 ist dazu ausgebildet, basierend auf dem Empfang des Lichtimpulses durch den Empfänger 24 ein Sensorsignal zu erzeugen. Das Sensorsignal beinhaltet somit die Information, ob der Lichtimpuls den Empfänger 24 erreicht hat. Vorzugsweise kann der optische Sender 22 in zeitlichen Intervallen Lichtimpulse erzeugen und sendet diese entlang eines Strahlengangs 28 zu dem optischen Empfänger 24.

Die Sensoreinrichtung 16 kann auch eine Vielzahl von optischen Sendern 22 und korrespondierenden optischen Empfängern 24 aufweisen. Die Vielzahl von Sendern 22 und die Vielzahl von Empfängern 24 können jeweils in einer Leiste angeordnet sein. Die beiden Leisten können auf gegenüberliegenden Seiten des Zugangs 20 angeordnet sein. Dabei sendet jeder Sender 22 einen Lichtimpuls entlang eines Strahlengangs 28 zu dem korrespondierenden Empfänger 24. In anderen Worten bilden die Lichtimpulse Lichtstrahlen zwischen den jeweiligen Sendern 22 und Empfängern 24 aus. Die einzelnen Lichtstrahlen spannen zwischen den Sendern 22 und Empfängern 24 ein sogenanntes Lichtgitter auf. Das Lichtgitter wird derart in dem Zugang des Sicherheitsbereichs 12 angeordnet, dass eine Person beim Betreten des Sicherheitsbereichs mindestens einen Lichtstrahl kurzzeitig unterbricht, so d.h. dass die Sichtverbindung zwischen einem Sender 22 und dem zugehörigen Empfänger 24 getrennt wird, solange sich die Person zwischen dem Sender 22 und dem Empfänger 24 im Zugang 20 befindet. Die Sensoreinrichtung 16 kann für jedes Sender-Empfänger-Paar ein separates Sensorsignal erzeugen. Alternativ kann die Sensoreinrichtung 16 ein Sensorsignal erzeugen, das die Information beinhaltet, ob ein Empfänger 24 der Vielzahl von Empfängern den entsprechenden Lichtimpuls nicht empfangen hat.

Das Zugangsabsicherungssystem 10 weist des Weiteren eine Steuereinrichtung 18 auf. Die Steuereinrichtung 18 kann über eine Leitung 30 mit dem optischen Sender 22 und über eine Leitung 32 mit dem optischen Empfänger 24 verbunden sein. Bei einer Vielzahl von Sendern 22 und Empfängern 24 können für jeden Sender 22 und Empfänger 24 eine Leitung 30, 32 vorgesehen sein. Alternativ können auch eine Leitung 30 für alle Sender 22 und eine Leitung 32 für alle Empfänger vorgesehen sein.

Die Steuereinrichtung 18 ist dazu ausgebildet, das Sensorsignal auszulesen und die in dem Sicherheitsbereich 12 angeordnete Anlage oder Maschine 14 unter Berücksichtigung des Sensorsignals zu Steuern. Beispielsweise kann Steuereinrichtung 18 die Anlage oder Maschine 14 stoppen, wenn ein Lichtimpuls blockiert wurde. Alternativ kann die Steuereinrichtung 18 die Anlage oder Maschine 14 in einen gefahrlosen Zustand überführen.

Beispielsweise kann die Steuereinrichtung 18 zum Stoppen der Anlage oder Maschine 14 die Stromzufuhr 36 zu der Anlage oder Maschine 14 unterbrechen. Dazu ist die Steuereinrichtung 18 mit Schützen 34 verbunden, die in der elektrischen Verschaltung zwischen der Stromzufuhr 36 und der Anlage oder Maschine 14 angeordnet sind. Wenn ein Lichtstrahl unterbrochen wird, unterbricht die Steuereinrichtung 18 mit Hilfe der Schützen 34 die Stromzufuhr 36 zu der Anlage oder Maschine 14 und bringt die Anlage oder Maschine 14 somit zum Stillstand. In diesem Ausführungsbeispiel ist den gängigen Normen entsprechend die Ansteuerung der Schützen 34 redundant ausgebildet.

Die Steuereinrichtung 18 kann den optischen Sender 22 ansteuern. Dazu kann beispielsweise vorgesehen sein, dass die Steuereinrichtung 18 ein Testsignal erzeugt und diese an den/die optischen Sender 22 sendet. Der/die Sender 22 übertragen das Testsignal mit Hilfe des jeweils zugehörigen gepulsten Lichtstrahls zu dem/den Empfänger 24. Beispielsweise kann das Testsignal auf den jeweiligen gepulsten Lichtstrahl aufmoduliert werden. Der/die Empfänger 24 empfangen das Testsignal und senden es zurück an die Steuereinrichtung 18. Die Steuereinrichtung 18 vergleicht das empfangene Testsignal mit dem ursprünglichen Testsignal.

Betritt nun eine Person den Sicherheitsbereich, wird ein gepulster Lichtstrahl kurzzeitig unterbrochen, so dass das Testsignal nicht bzw. nicht vollständig zu einem Empfänger 24 gelangt. Wird ein unvollständiges Signal von einem Empfänger 24 zurückgegeben, erkennt dies die Steuereinrichtung 18 beim Vergleichen des ausgehenden Signals mit dem eingehenden Signal und trennt daraufhin mittels der Schützen 34 die Stromzufuhr 36 zu der Anlage oder Maschine 14.

Alternativ kann die Generierung und Auswertung des Testsignals auch in der Sensoreinrichtung erfolgen. Das Sensorsignal enthält dann nur die Information, ob ein Lichtstrahl eines Sender-Empfänger-Paares unterbrochen wurde.

Das Zugangsabsicherungssystem 10 weist des Weiteren, wie in Fig. 2 dargestellt, eine Verriegelungseinrichtung 40 auf. Die Verriegelungseinrichtung 40 ist ein zusätzliches mechanisches Bauteil, dass an bzw. in dem Zugang 20 des Sicherheitsbereichs 12 angeordnet sein kann. Die Verriegelungseinrichtung 40 bildet einen zusätzlichen Verriegelungsmechanismus zur zusätzlichen Absicherung des Zugangsabsicherungssystems 10. Beispielsweise kann dieser Verriegelungsmechanismus zur Absicherung des Sicherheitsbereichs 12 in einem Sonderbetriebsfall der Anlage oder Maschine 14 dienen.

In Fig. 2 zeigt zwei Ausführungsformen (A) und (B) der Verriegelungseinrichtung 40. dargestellt. Die Ausführungsformen (A) und (B) weisen im Wesentlichen dieselben Komponenten auf und unterscheiden sich im Wesentlichen nur in der unterschiedlichen Bewegung des Verriegelungsmechanismus.

Die Verriegelungseinrichtung 40 weist in beiden Ausführungsformen einen Grundkörper 42 und ein Blockierelement 44 auf. Das Blockierelement 44 ist an dem Grundkörper 42, insbesondere bewegbar, angeordnet. Der Grundkörper 42 ist an dem Zugang 20 zu dem Sicherheitsbereich 12 angeordnet. Insbesondere ist der Grundkörper 42 außerhalb eines Strahlengangs 28 des Lichtimpulses zwischen dem Sender 22 und dem Empfänger 24 angeordnet. Der Grundkörper 42 kann an dem Sender 22 oder dem Empfänger 24, d.h. senderseitig oder empfängerseitig, angeordnet sein. Insbesondere kann der Grundkörper 42 mit dem Sender 22 oder dem Empfänger 24 starr verbunden sein. In anderen kann die relative Position des Grundkörpers 42 bezüglich des Senders 22 und/oder des Empfängers 24 fest sein.

Das Blockierelement 44 ist relativ zu dem Grundkörper 42 zwischen einer Freigabestellung 48 und einer Sperrstellung 50 bewegbar. Insbesondere ist das Blockierelement 44 gegenüber dem Grundkörper 42 aus der Freigabestellung 48 in die Sperrstellung 50 bzw. aus der Sperrstellung 50 in die Freigabestellung 48 bringbar. In der Freigabestellung 48 ist das Blockierelement 44 außerhalb eines Strahlengangs 28 des Lichtimpulses zwischen dem Sender 22 und dem Empfänger 24 angeordnet. In der Sperrstellung 50 ist das Blockierelement 44 in einem Strahlengang 28 des Lichtimpulss zwischen dem Sender 22 und dem Empfänger 24 angeordnet. Dadurch blockiert das Blockierelement 44 in der Sperrstellung 50 den Lichtimpuls zwischen Sender 22 und Empfänger 24. In anderen Worten blockiert das Blockierelement 44 in der Sperrstellung 50 den Empfang des Lichtimpulses.

Bei einer Vielzahl von Sendern 22 und korrespondierenden Empfängern 24 kann das Blockierelement 44 derart ausgebildet sein, dass es in der Sperrstellung 50 mindestens in zwei Strahlengängen 28 der Lichtimpulse zwischen den Sendern und Empfängern angeordnet ist.

Des Weiteren kann ein Sicherungselement 46 vorgesehen sein, mittels dem die Verriegelungseinrichtung 40 in der Sperrstellung 50 versperrbar ist. Ist das Blockierelement 44 in der Sperrstellung 50 versperrt, kann das Blockierelement 44 nicht relativ zu dem Grundkörper 42 bewegt werden. Erst durch Lösen der Versperrung kann das Blockierelement 44 wieder relativ zu dem Grundkörper 42 bewegt werden. Das Sicherungselement 46 kann beispielsweise als abschließbares Sicherungselement 46, insbesondere als Vorhängeschloss, ausgebildet sein.

Das Blockierelement 44 kann beispielsweise durch eine lineare Bewegung, insbesondere durch ein Verschieben in eine Schubrichtung, oder durch eine Drehbewegung, insbesondere durch Verschwenken in einer Drehrichtung um eine Schwenkachse, zwischen der Freigabestellung und der Sperrstellung bewegbar sein.

In der Ausführungsform (A) der Fig. 2 ist das Blockierelement 44 durch eine Drehbewegung zwischen der Freigabestellung 48 und Sperrstellung 50 bewegbar. Dabei ist das Blockierelement 44 in einer Drehrichtung 52 um eine Schwenkachse 54 zwischen der Freigabestellung 48 und der Sperrstellung 50 drehbar. In anderen Worten ist das Blockierelement 44 gegenüber dem Grundkörper 42 aus der Freigabestellung 48 in die Sperrstellung 50 in der Drehrichtung 52 um die Schwenkachse 54 schwenkbar. Dazu kann das Blockierelement 44 an dem Grundkörper 42 beispielsweise drehbar gelagert sein. Insbesondere kann der Grundkörper einen Stift oder einen Stab aufweisen, der als Schwenkachse für das Blockierelement 44 dient.

Die Schenkachse 54 schließt grundsätzlich einen Winkel mit dem Strahlengang 28 des Lichtimpulses ein, der zwischen 0° und 180° liegt. Vorzugsweise ist die Schwenkachse 54 parallel oder senkrecht zu dem Strahlengang 28 des Lichtimpulses angeordnet. In der Ausführungsform (A) der Fig. 2 ist die Schwenkachse 54 senkrecht zu dem Strahlengang 28 des Lichtimpulses angeordnet.

Das Sicherungselement 46 kann in dieser Ausführungsform dazu ausgebildet sein, den Grundkörper 42 und das Blockierelement 44 in der Sperrstellung 50 in der Drehrichtung 52 drehfest miteinander zu verbinden.

In der Ausführungsform (B) der Fig. 2 ist das Blockierelement 44 durch eine lineare Bewegung zwischen der Freigabestellung 48 und Sperrstellung 50 bewegbar. Dabei ist das Blockierelement 44 in einer linearen Schubrichtung 56 zwischen der Freigabestellung 48 und der Sperrstellung 50 verschiebbar. Dazu kann der Grundkörper 42 beispielsweise eine Schiene aufweisen, entlang der das Blockierelement 44 in der Schubrichtung 56 verschiebbar ist.

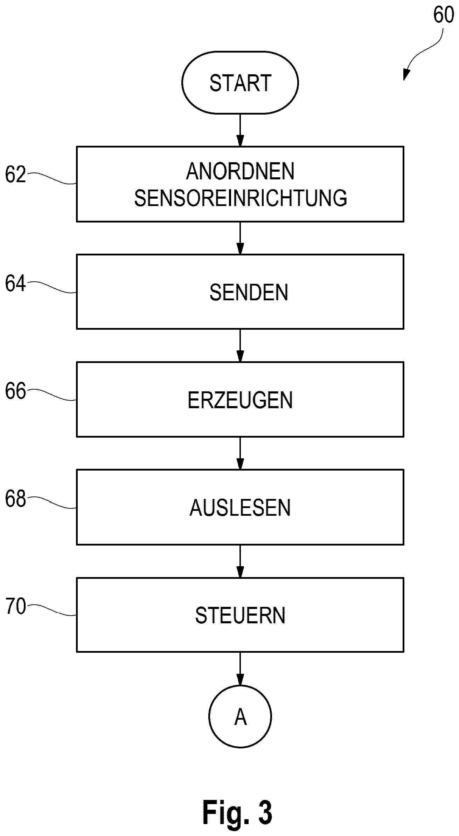

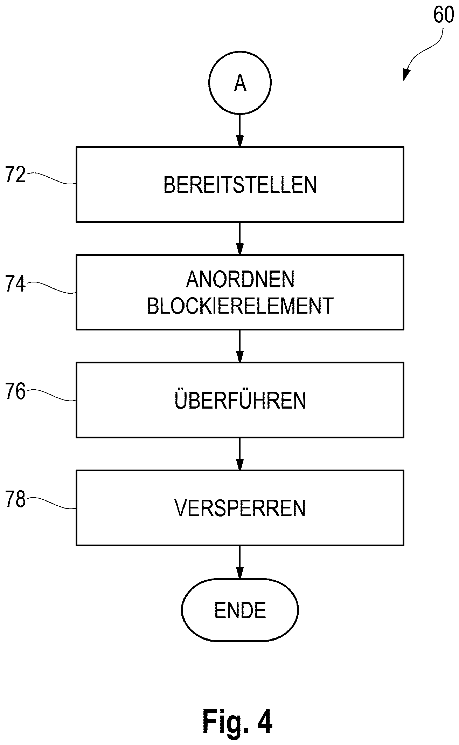

In den Figuren 3 und 4 ist eine Ausführungsform eines Verfahrens 60 zum Absichern einer in einem Sicherheitsbereich 12 angeordneten Maschine oder Anlage 14 dargestellt. Das Verfahren 60 beschreibt die Funktion des Zugangsabsicherungssystems 10 aus den Figuren 1 und 2.

In einem ersten Schritt 62 des Verfahrens 60 wird die Sensoreinrichtung 16 bereitgestellt.

In einem weiteren Schritt 64 des Verfahrens 60 wird ein Lichtimpuls von dem optischen Sender 22 zu dem optischen Empfänger 24 gesendet.

In einem weiteren Schritt 66 des Verfahrens 60 wird ein Sensorsignal mittels der Sensoreinrichtung 16 basierend auf dem Empfang des Lichtimpulses durch den Empfänger 24 erzeugt.

In einem weiteren Schritt 68 des Verfahrens 60 wird das Sensorsignal mittels der Steuerungseinrichtung 18 ausgelesen.

In einem weiteren Schritt 70 des Verfahrens 60 die in dem Sicherheitsbereich 12 angeordnete Maschine oder Anlage 14 mittels der Steuerungseinrichtung 18 unter Berücksichtigung des Sensorsignals gesteuert.

In einem weiteren Schritt 72 des Verfahrens 60 wird die Verriegelungseinrichtung 40 mit dem Grundkörper 42 und dem daran angeordneten Blockierelement 44 bereitgestellt.

In einem weiteren Schritt 74 des Verfahrens 60 wird das Blockierelement 44 in der Freigabestellung 48 angeordnet, in der das Blockierelement 44 außerhalb eines Strahlengangs 28 des Lichtimpulses zwischen dem Sender 22 und dem Empfänger 24 angeordnet ist.

In einem weiteren Schritt 76 des Verfahrens 60 wird das Blockierelement 44 von der Freigabestellung 48 in die Sperrstellung 50 überführt, in der das Blockierelement 44 in einem Strahlengang 28 des Lichtimpulses zwischen dem Sender 22 und dem Empfänger 24 angeordnet ist, um den Empfang des Lichtimpulses zu blockieren.

In einem weiteren Schritt 78 des Verfahrens 60 wird die Verriegelungseinrichtung 40 in der Sperrstellung 50 mittels eines Sicherungselements 46 versperrt.

Vorzugsweise wird in dem Schritt des Versperrens 78 ein abschließbares Sicherungselement 46 in eine Aufnahme der Verriegelungseinrichtung 40 eingeführt, um das Blockierelement 44 in seiner Sperrstellung 50 zu halten.

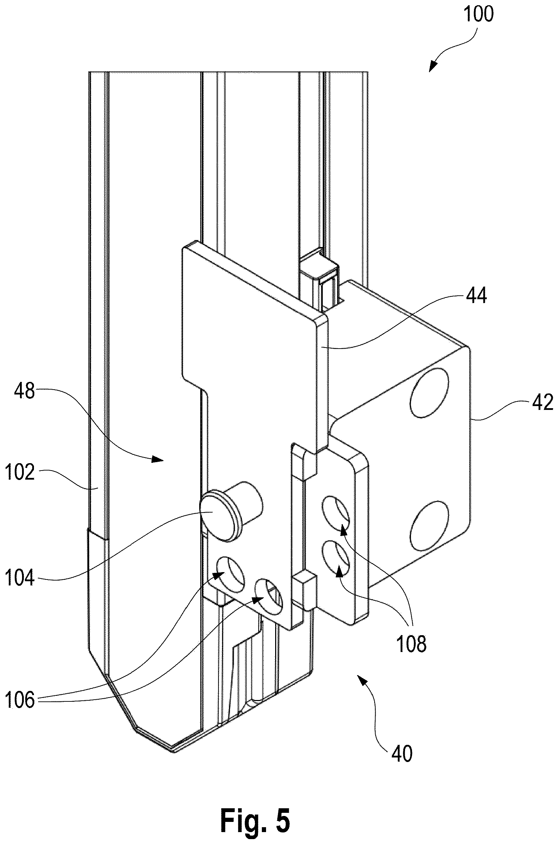

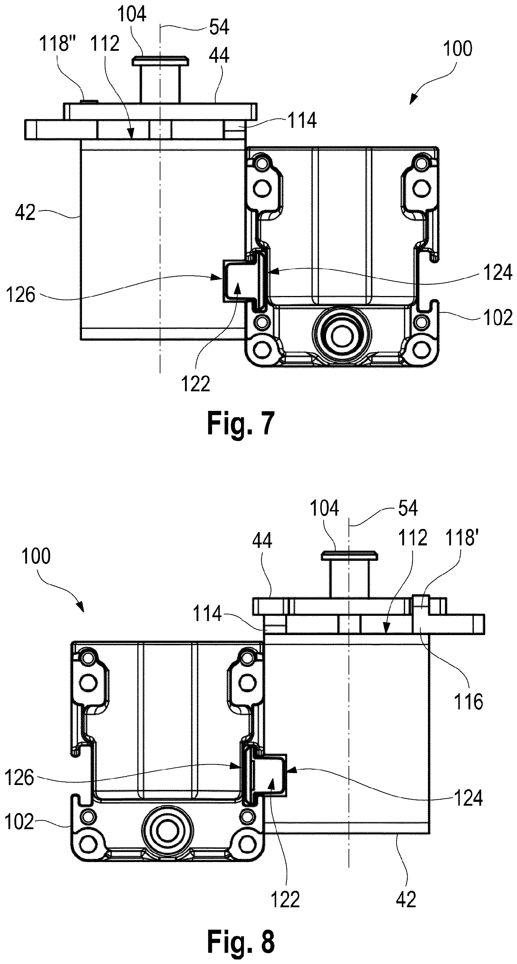

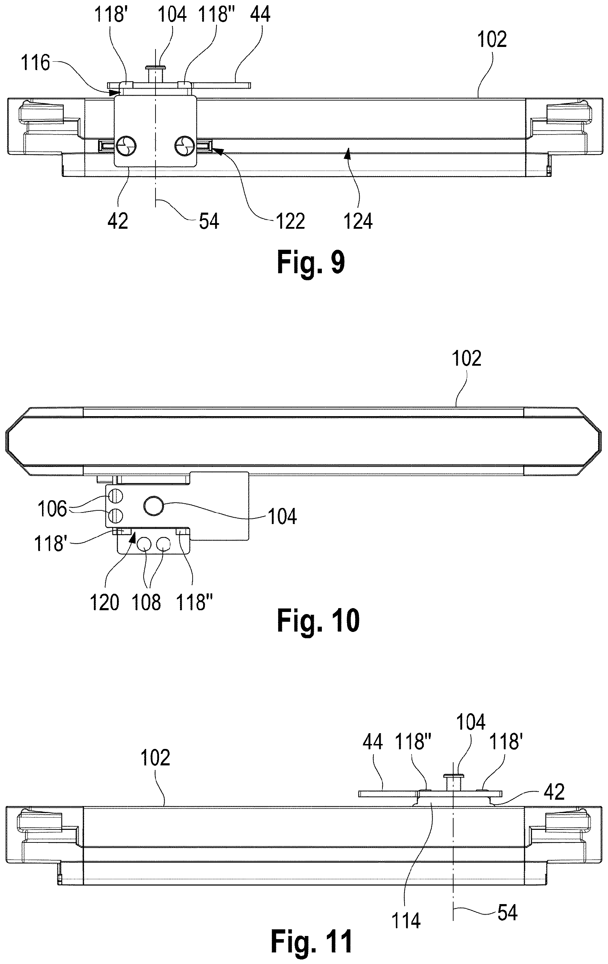

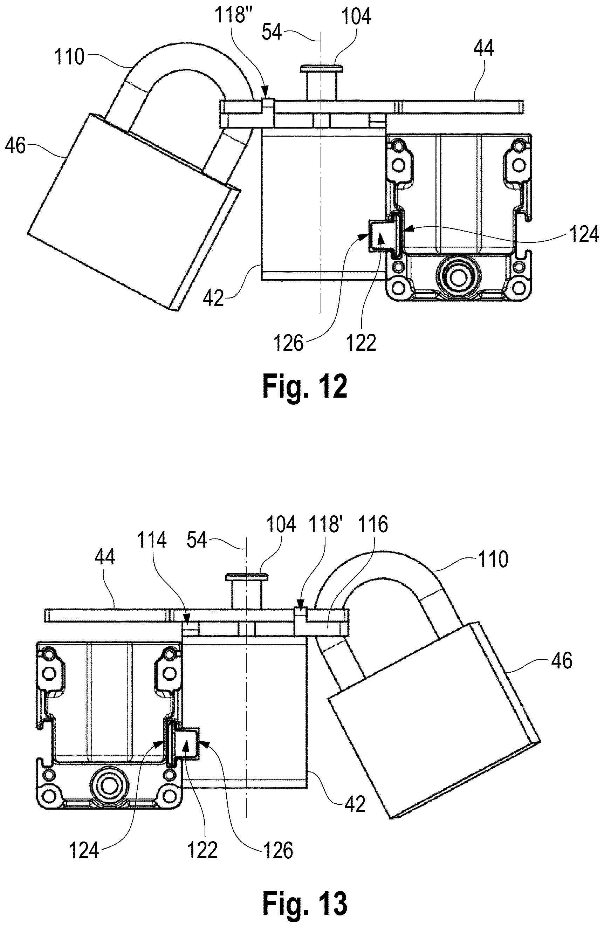

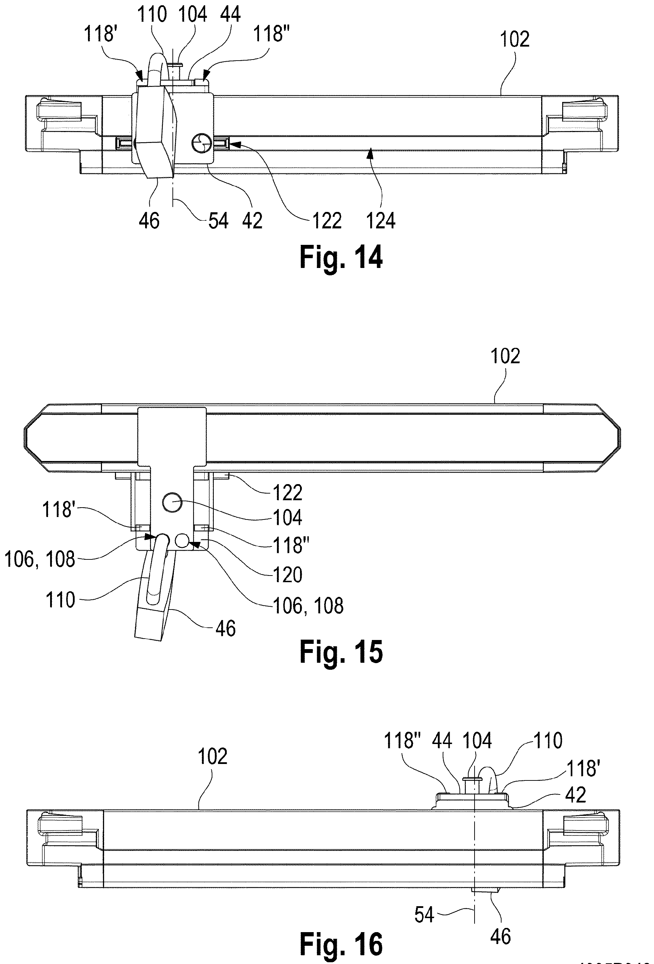

In den Figuren 5 bis 16 ist eine zweite Ausführungsform eines Zugangsabsicherungssystems 100 dargestellt. Das Zugangsabsicherungssystem 100 weist im Wesentlichen dieselben Komponenten wie das Zugangsabsicherungssystems 10 aus den Figuren 1 und 2 auf. Gleiche Komponenten sind daher mit denselben Bezugszeichen gekennzeichnet und werden nicht näher erläutert.

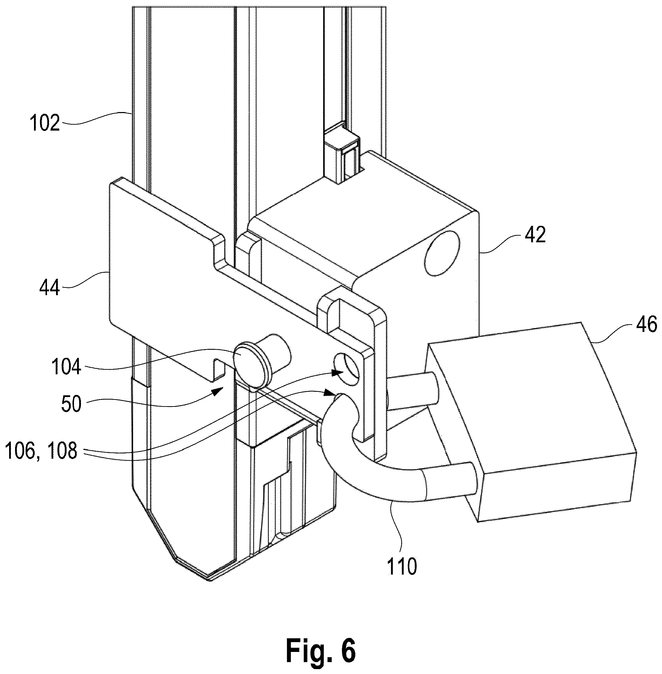

Die Figuren 5 und 7 bis 11 zeigen verschiedene Ansichten des Zugangsabsicherungssystems 100 in einem Freigabezustand, in dem das Blockierelement 44 in der Freigabestellung 48 angeordnet ist. Die Figuren 6 und 12 bis 16 zeigen verschiedene Ansichten des Zugangsabsicherungssystems 100 in einem Sperrzustand, in dem das Blockierelement 44 in der Sperrstellung 50 angeordnet ist.

Das Zugangsabsicherungssystem 100 weist des Weiteren eine Leiste 102 auf, in der ein oder mehrere Sender 22 oder ein oder mehrere Empfänger 24 angeordnet sind. Die Leiste 102 bildet somit ein Gehäuse für die Sender 22 oder die Empfänger 24. Die Leiste 102 kann auf einer Seite des Zugangs 20 angeordnet sein.

Des Weiteren weist das Zugangsabsicherungssystem 100 hier ein Kupplungselement 122 auf, das die Leiste 102 und den Grundkörper 42 starr miteinander verbindet. Die Leiste 102 weist dazu eine erste Nut 124 auf, die sich in einer Erstreckungsrichtung der Leiste 102 erstreckt. Vorzugsweise ist die Erstreckungsrichtung der ersten Nut senkrecht zu dem Strahlengang 28 des Lichtimpulses und der Schwenkachse 54. Der Grundkörper 42 weist eine zweite Nut auf, die sich in derselben Erstreckungsrichtung erstreckt. Das Kupplungselement 122 erstreckt sich ebenfalls in der Erstreckungsrichtung und greift sowohl in die erste Nut als auch in die zweite Nut ein, um den Grundkörper 42 und die Leiste 102 starr miteinander zu verbinden.

Alternativ oder zusätzlich kann der Grundkörper 42 auch an der Leiste 102 mittels weiterer Befestigungsmittel, beispielsweise einer oder mehrerer Schrauben, befestigt werden.

Das Blockierelement 44 ist in der Ausführungsform der Figuren 5 bis 16, wie in der Ausführungsform (A) der Fig. 2, um eine Schwenkachse 54 drehbar bzw. schwenkbar an dem Grundkörper 42 gelagert. Anders als in der Ausführungsform (A) der Fig. 2 verläuft die Schwenkachse 54 parallel zu einem Strahlengang 28 des Lichtimpulses der Sensoreinrichtung 16.

Das Zugangsabsicherungssystem 100 weist des Weiteren einen Haltegriff 104 auf, um das Blockierelement 44 gegenüber dem Grundkörper 42 von Hand verschwenken zu können. Grundsätzlich wäre zwar auch eine durch einen Aktor angetriebene Schwenkbewegung des Blockierelements 44 denkbar. Eine Verschwenkbarkeit des Blockierelements 44 von Hand bietet jedoch eine einfache Handhabbarkeit und spart zudem Kosten für ansonsten extra vorzusehende Aktoren. Der gezeigte Haltegriff 104 verläuft vorzugsweise entlang bzw. parallel zu der Schwenkachse 54, um welche das Blockierelement 44 schwenkbar ist.

Das Blockierelement kann über ein entlang der Schwenkachse 54 angeordnetes Federelement (nicht dargestellt) mit dem Grundkörper 42 gekoppelt sein. Dieses Federelement kann eine Federkraft ausüben, welche das Blockierelement 44 gegen die Oberseite des Grundkörpers 44 drückt. Zur Stabilisierung können zusätzliche Distanzscheiben vorgesehen sein.

Die Verriegelungseinrichtung 40 kann des Weiteren eine Aufnahme für das Sicherungselement 46 aufweisen. Wenn das Sicherungselement 46 in die Aufnahme eingeführt ist, wird das Blockierelement 44 in seiner Sperrstellung 50 gehalten. Das Sicherungselement 46 ist in der vorliegenden Ausführungsform als Vorhängeschloss ausgebildet. Das Sicherungselement weist einen Bügel 110 auf und ist abschließbar, d.h. dass der Bügel 110 gegen einen Grundkörper des Sicherungselement versperrbar ist.

Das Blockierelement 44 kann des Weiteren eine Bohrung 106 für das Sicherungselement 46 aufweisen. Die Bohrung 106 bildet die Aufnahme der Verriegelungseinrichtung 40 aus. Sobald der Bediener also das Blockierelement 44 in die Sperrstellung 50 gebracht hat, kann dieser zusätzlich den Bügel 110 des Sicherungselements 46 in die Bohrung 106 einführen. Ein Verschwenken des Blockierelements 44 aus seiner Sperrstellung 50 heraus ist dann nicht mehr möglich. Bei einem Versuch das Blockierelement 44 zu verschwenken, würde das Sicherungselement 46 nämlich mit dem Grundkörper 42 der Verriegelungseinrichtung 48 kollidieren, so dass der Verriegelungshebel 52 in seiner Sperrstellung 50 blockiert ist.

Der Grundkörper 42 kann des Weiteren eine Aussparung 108 aufweisen, die in der Sperrstellung 50 des Blockierelements 44 mit der Bohrung 106 des Blockierelements 44 zumindest teilweise fluchtet. Die Aussparung 108 des Grundkörpers 42 kann ebenfalls als Bohrung ausgebildet sein. Zum Versperren der Verriegelungseinrichtung 40 kann dann der Bügel 110 des Sicherungselements 46 durch die Bohrung 106 und die Aussparrung 108 geführt werden, um den Grundkörper 42 und das Blockierelement 44 in der Drehrichtung 52 um die Drehachse 54 drehfest miteinander zu verbinden, um das Blockierelement 44 in der Sperrstellung 50 zu halten.

In der vorliegenden Ausführungsform der Figuren 5 bis 16 weist das Blockierelement 44 zwei Bohrungen 106 als Aufnahme für auf jeweils ein abschließbares Sicherungselement 46 auf. Zwei Bohrungen haben den Vorteil, dass mehrere (zwei) Vorhängeschlösser in diese eingeführt werden können. Auf diese Weise kann jeder Bediener sein persönliches Vorhängeschloss in eine der beiden Bohrungen einführen.

Entsprechend kann der Grundkörper 42 auch zwei Aussparungen 108 aufweisen, welche in der Sperrstellung 50 des Blockierelements 44 mit den in dem Blockierelement 44 vorgesehenen Bohrungen 106 zumindest teilweise fluchten. Diese Aussparungen 108 können grundsätzlich auch als Bohrungen ausgestaltet sein. Sie bieten einen weiteren mechanischen Schutz dafür, der verhindert, dass das Blockierelement 44 bei eingehängtem Vorhängeschloss aus seiner Sperrstellung 50 verschwenkbar ist. Da die Aussparungen 108 mit den Bohrungen 106 vorzugsweise exakt fluchten, entsteht beim Einhängen eines Vorhängeschlosses in eine der beiden Öffnungen sozusagen ein Formschluss zwischen dem Bügel 110 des Vorhängeschlosses und der jeweiligen Bohrung 106 bzw. Aussparung 108.

Das Blockierelement 44 ist vorzugsweise sowohl in der Freigabestellung 48 als auch in der Sperrstellung 50 mit dem Grundkörper 42 verrastbar. Der Grundkörper 42 weist dazu an seiner Oberseite zwei Ausnehmungen 112, 120 auf, in welchen das Blockierelement 44 bündig angeordnet werden kann. Dabei entsteht eine Art Formschluss zwischen dem Blockierelement 44 und den Ausnehmungen 112 bzw. 120. Die erste Ausnehmung 112 ist der Freigabestellung 48 zugeordnet. Die zweite Ausnehmung 120 ist der Sperrstellung 50 zugeordnet. Beide Ausnehmungen 112, 120 werden seitlich durch zwei Stege begrenztDiese dienen als seitliche Wände, welche das Blockierelement 44 in der Freigabestellung 48 bzw. in der Sperrstellung 50 daran hindern, zu verrutschen bzw. zu verschwenken. Hierbei weist der Grundkörper 42 einen ersten Steg 114 und einen zweiten Steg 116 auf, die als seitliche Wände der ersten Ausnehmung 112 dienen. Der zweite Steg 116 weist zudem zwei Nasen 118', 118", die als Stege ausgebildet sind und als seitliche Wände der zweiten Ausnehmung 120 dienen. Vorzugsweise sind die erste und die zweite Ausnehmung 112, 120 in einem Winkel von 90° zueinander angeordnet.

Um das Blockierelement 44 von der Freigabestellung 48 in die Sperrstellung 50 bzw. von der Sperrstellung 50 in die Freigabestellung 48 zu verschwenken, muss das Blockierelement 44 mithilfe des Haltegriffs 104 nach oben, sprich von dem Grundkörper 42 weg, entlang der Schwenkachse 54 über die Stege 114, 116, 118', 118" gezogen werden. Hierbei muss der Bediener die von dem Federelement ausgeübte Federkraft überwinden. Erst dann lässt sich das Blockierelement 44 in die jeweils andere Stellung verschwenken.

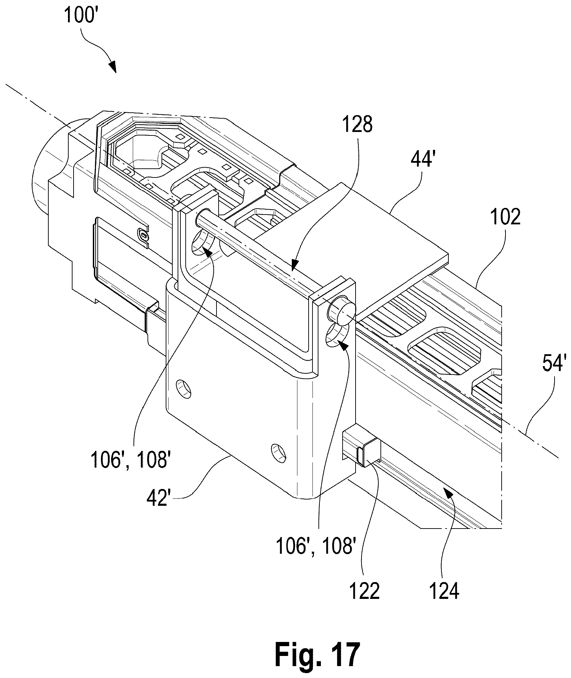

In Figur 17 ist eine dritte Ausführungsform eines Zugangsabsicherungssystems 100' dargestellt. Das Zugangsabsicherungssystem 100' ist in dem Sperrzustand dargestellt, in dem das Blockierelement 44' in der Sperrstellung 50 angeordnet ist. Das Zugangsabsicherungssystem 100' weist im Wesentlichen dieselben Komponenten wie das Zugangsabsicherungssystem 100, das in den Figuren 5 bis 16 dargestellt ist, auf. Gleiche Komponenten sind daher mit denselben Bezugszeichen gekennzeichnet und werden nicht näher erläutert.

Das Zugangsabsicherungssystem 100' unterscheidet sich von dem Zugangsabsicherungssystem 100 darin, dass die Schwenkachse 54' der Verriegelungseinrichtung 40' nicht parallel sondern senkrecht zu einem Strahlengang 28 des Lichtimpulses der Sensoreinrichtung 16 verläuft. Insbesondere verläuft die Schwenkachse 54' parallel zu der Erstreckungsrichtung der Leiste 102. Dadurch wird das Blockierelement 44 'um die Schwenkachse 54' zwischen der Freigabestellung 48 und er Sperrstellung 50 gedreht bzw. umgeklappt. Dazu weist der Grundkörper 42' einen Stift oder Stab 128 auf, der entlang der Schwenkachse 54' angeordnet ist. Das Blockierelement 44' ist mittels des Stifts oder Stabs 128 an dem Grundkörper 42' drehbar gelagert.

Das Blockierelement 44' weist wieder zwei Bohrungen 106' auf und der Grundkörper 42' weist entsprechende Aussparungen 108' auf, die mit den Bohrungen 106' in der Sperrstellung 50 fluchten. Die Aussparungen 108' sind ebenfalls als Bohrungen ausgebildet. In der Sperrstellung 50 kann jeweils der Bügel ein Sicherungselements 46 durch die Bohrungen 106' und die Aussparungen 108' geführt werden, um das Blockierelement 44' in der Sperrstellung 50 zu versperren.

## Patentansprüche

1. Verriegelungseinrichtung (40) für eine Sensorvorrichtung, welche einen Zugang (20) zu einer in einem Sicherheitsbereich (12) angeordneten Maschine oder Anlage (14) überwacht und einen optischen Sender (22) und einen optischen Empfänger (24) besitzt, welche durch Austausch von Lichtimpulsen in Wechselwirkung miteinander bringbar sind und dadurch ein Sensorsignal erzeugen, wobei die Verriegelungseinrichtung (40) einen Grundkörper (42) und ein daran angeordnetes Blockierelement (44) aufweist, wobei das Blockierelement (44) gegenüber dem Grundkörper (42) aus einer Freigabestellung (48) in eine Sperrstellung (50) bringbar ist, in der das Blockierelement (44) in einem Strahlengang (28) der Lichtimpulse zwischen dem Sender (22) und dem Empfänger (24) angeordnet ist und deren Wechselwirkung verhindert, **dadurch gekennzeichnet, dass** die Verriegelungseinrichtung (40) mittels eines abschließbaren Sicherungselements (46) in der Sperrstellung (50) versperrbar ist, wobei die Verriegelungseinrichtung (40) eine Aufnahme für das abschließbare Sicherungselement (46) aufweist und das Sicherungselement (46), in die Aufnahme eingeführt, das Blockierelement (44) in seiner Sperrstellung (50) hält.

2. Verriegelungseinrichtung (40) nach Anspruch 1, **dadurch gekennzeichnet, dass** das Blockierelement (44) gegenüber dem Grundkörper (42) aus der Freigabestellung (48) in die Sperrstellung (50) in einer Drehrichtung (52) um eine Schwenkachse (54) mechanisch verschwenkbar ist.

3. Verriegelungseinrichtung (40) nach Anspruch 2, **dadurch gekennzeichnet, dass** die Schwenkachse (54) parallel oder senkrecht zu dem Strahlengang (28) des Lichtimpulses angeordnet ist.

4. Verriegelungseinrichtung (40) nach Anspruch 2 oder 3, **dadurch gekennzeichnet, dass** das Sicherungselement (46) dazu ausgebildet ist, den Grundkörper (42) und das Blockierelement (44) in der Sperrstellung (50) in der Drehrichtung (52) drehfest miteinander zu verbinden.

5. Verriegelungseinrichtung (40) nach einem der Ansprüche 2 bis 4, **dadurch gekennzeichnet, dass** an dem Blockierelement (44) ein Haltegriff (104) zum Verschwenken des Blockierelements (44) um die Schwenkachse (54) von Hand vorgesehen ist, insbesondere wobei der Haltegriff (104) im Wesentlichen parallel zu der Schwenkachse (54), insbesondere im Wesentlichen entlang der Schwenkachse (54), verläuft.

6. Verriegelungseinrichtung (40) nach einem der Ansprüche 2 bis 5, **dadurch gekennzeichnet, dass** das Blockierelement (44) über ein entlang der Schwenkachse (54) angeordnetes Federelement mit dem Grundkörper (42) gekoppelt ist, welches in der Freigabestellung (48) und/oder in der Sperrstellung (50) eine Federkraft ausübt, die das Blockierelement (44) gegen den Grundkörper (42) drückt.

7. Verriegelungseinrichtung (40) nach einem der Ansprüche 1 bis 6, **dadurch gekennzeichnet, dass** das Blockierelement (44) in der Freigabestellung (48) und/oder in der Sperrstellung (50) mit dem Grundkörper verrastbar ist, wobei vorzugsweise an dem Grundkörper (42) eine erste Ausnehmung (112) und eine zweite Ausnehmung (120) vorgesehen sind, und wobei das Blockierelement (44) in der Freigabestellung (48) durch Anordnung in der ersten Ausnehmung (112) verrastet und in der Sperrstellung (50) durch Anordnung in der zweiten Ausnehmung (120) verrastet.

8. Verriegelungseinrichtung (40) nach einem der Ansprüche 1 bis 7, **dadurch gekennzeichnet, dass** die Aufnahme für das abschließbare Sicherungselement (46) als Bohrung (106) in dem Blockierelement (44) ausgestaltet ist.

9. Verriegelungseinrichtung (40) nach Anspruch 8, **dadurch gekennzeichnet, dass** an dem Grundkörper (42) eine Aussparung (108) vorgesehen ist, welche in der Sperrstellung (50) des Blockierelements (44) mit der in dem Blockierelement (44) vorgesehenen Bohrung (106) zumindest teilweise fluchtet.

10. Verriegelungseinrichtung (40) nach einem der Ansprüche 1 bis 9, **dadurch gekennzeichnet, dass** in dem Blockierelement (44) zwei Bohrungen (106) als Aufnahme für jeweils ein abschließbares Sicherungselement (46) vorgesehen sind und an dem Grundkörper (42) zwei Aussparungen (108) vorgesehen sind, welche in der Sperrstellung (50) des Blockierelements (44) mit den in dem Blockierelement (44) vorgesehenen Bohrungen (106) zumindest teilweise fluchten, wobei die Sicherungselemente (46), in die jeweilige Aufnahme eingeführt, das Blockierelement (44) in seiner Sperrstellung halten.

11. Verriegelungseinrichtung (40) nach einem der Ansprüche 1 bis 10, **dadurch gekennzeichnet, dass** der Grundkörper (42) an dem Sender (22) oder an dem Empfänger (24) angeordnet ist.

12. Verriegelungseinrichtung (40) nach Anspruch 11, **dadurch gekennzeichnet, dass** der Grundkörper (42) mit dem Sender (22) oder dem Empfänger (24) starr verbindbar ist.

13. Verriegelungseinrichtung (40) nach einem der Ansprüche 1 bis 12, **dadurch gekennzeichnet, dass** die Sensoreinrichtung (16) eine Vielzahl von optischen Sendern (22) und korrespondierenden optischen Empfängern (24) aufweist, wobei das Blockierelement (44) in seiner Sperrstellung (48) in mindestens zwei Strahlengängen (28) der Lichtimpulse zwischen den Sendern (22) und den Empfängern (24) angeordnet ist.

14. Zugangsabsicherungssystem (10) zum Absichern eines Zugangs (20) zu einer in einem Sicherheitsbereich (12) angeordneten Maschine oder Anlage (14), wobei das Zugangsabsicherungssystem (10) eine Sensoreinrichtung (16) und eine Steuerungseinrichtung (18) aufweist, wobei die Sensoreinrichtung einen optischen Sender (22) und einen optischen Empfänger (24) aufweist, wobei der optische Sender (22) eingerichtet ist, einen Lichtimpuls zum optischen Empfänger (24) zu senden, wobei die Sensoreinrichtung (16) dazu ausgebildet ist, basierend auf dem Empfang des Lichtimpulses durch den Empfänger (24) ein Sensorsignal zu erzeugen, und wobei die Steuerungseinrichtung (18) dazu ausgebildet ist, das Sensorsignal auszulesen und die in dem Sicherheitsbereich (12) angeordnete Maschine oder Anlage (14) unter Berücksichtigung des Sensorsignals zu steuern, **dadurch gekennzeichnet, dass** das Zugangsabsicherungssystem (10) des Weiteren eine Verriegelungseinrichtung (40) nach einem der Ansprüche 1 bis 13 aufweist.

15. Verfahren (60) zum Absichern eines Zugang (20) zu einer in einem Sicherheitsbereich (12) angeordneten Maschine oder Anlage (14), wobei das Verfahren (60) die folgenden Schritte aufweist:
- Bereitstellen (62) einer Sensoreinrichtung (16), wobei die Sensoreinrichtung (16) einen optischen Sender (22) und einen optischen Empfänger (24) aufweist,
- Senden (64) eines Lichtimpulses von dem optischen Sender (22) zu dem optischen Empfänger (24);
- Erzeugen (66) eines Sensorsignals mittels der Sensoreinrichtung (16) basierend auf dem Empfang des Lichtimpulses durch den Empfänger (24);
- Auslesen (68) des Sensorsignals mittels einer Steuerungseinrichtung (18); und
- Steuern (70) der in dem Sicherheitsbereich (12) angeordnete Maschine oder Anlage (14) mittels der Steuerungseinrichtung (18) unter Berücksichtigung des Sensorsignals,
**gekennzeichnet durch** die folgenden Schritte:
- Bereitstellen (72) einer Verriegelungseinrichtung (40) mit einem Grundkörper (42) und einem daran angeordneten Blockierelement (44);
- Anordnen (74) des Blockierelements (44) in einer Freigabestellung (48), in der das Blockierelement (44) außerhalb eines Strahlengangs (28) des Lichtimpulses zwischen dem Sender (22) und dem Empfänger (24) angeordnet ist;
- Überführen (76) des Blockierelements (44) von der Freigabestellung (48) in eine Sperrstellung (50), in der das Blockierelement (44) in einem Strahlengang (28) des Lichtimpulses zwischen dem Sender (22) und dem Empfänger (24) angeordnet ist, um den Empfang des Lichtimpulses zu blockieren; und
- Versperren (78) der Verriegelungseinrichtung (40) in der Sperrstellung (50) mittels eines abschließbaren Sicherungselements (46),
wobei die Verriegelungseinrichtung (40) eine Aufnahme für das abschließbare Sicherungselement (46) aufweist und das abschließbare Sicherungselement (46), in die Aufnahme eingeführt, das Blockierelement (44) in seiner Sperrstellung (50) hält.

## Claims

1. An interlocking device (40) for a sensor device which monitors an access point (20) to a machine or installation (14) arranged in a safety area (12) having an optical transmitter (22) and an optical receiver (24) which can interact with one another by exchanging light pulses and thereby generate a sensor signal, wherein the interlocking device (40) comprises a base body (42) and a blocking element (44) arranged thereon, wherein the blocking element (44) is moveable relatively to the base body (42) from a release position (48) into a blocking position (50), in which the blocking element (44) is arranged in a beam path (28) of the light pulses between the transmitter (22) and the receiver (24) and prevents their interaction,
**characterized in that** the interlocking device (40) is lockable in the blocking position (50) by a lockable securing element (46), wherein the interlocking device (40) comprises a receptacle for the securing element (46) and the securing element (46), when inserted into the receptacle, holds the blocking element (44) in its blocking position (50).

2. The interlocking device (40) according to claim 1, **characterized in that** the blocking element (44) is mechanically pivotable relatively to the base body (42) from the release position (48) into the blocking position (50) in a rotational direction (52) about a pivot axis (54).

3. The interlocking device (40) according to claim 2, **characterized in that** the pivot axis (54) is arranged parallel or perpendicular to the beam path (28) of the light pulse.

4. The interlocking device (40) according to claim 2 or 3, **characterized in that** the securing element (46) is configured to connect the base body (42) and the blocking element (44) to one another in a rotationally fixed manner in the rotational direction (52) in the blocking position (50).

5. The interlocking device (40) according to any one of the claims 2 to 4, **characterized in that** a handle (104) is provided on the blocking element (44) for pivoting the blocking element (44) about the pivot axis (54) by hand, in particular wherein the handle (104) extends substantially parallel to the pivot axis (54), in particular substantially along the pivot axis (54).

6. The interlocking device (40) according to any one of claims 2 to 5, **characterized in that** the blocking element (44) is coupled to the base body (42) via a spring element arranged along the pivot axis (54), the spring element exerting a spring force in the release position (48) and/or in the blocking position (50), which presses the blocking element (44) against the base body (42).

7. The interlocking device (40) according to any one of claims 1 to 6, **characterized in that** the blocking element (44) is latchable to the base body in the release position (48) and/or in the blocking position (50), in particular wherein a first recess (112) and a second recess (120) are provided on the base body (42), and wherein the blocking element (44) is locked in the release position (48) by arrangement in the first recess (112) and wherein the blocking element is locked in the blocking position (50) by arrangement in the second recess (120).

8. The interlocking device (40) according to any one of claims 1 to 7, **characterized in that** the receptacle for the lockable securing element (46) is designed as a hole (106) in the blocking element (44).

9. The interlocking device (40) according to claim 8, **characterized in that** the base body (42) comprises a recess (108), which is at least partially aligned with the hole (106) provided in the blocking element (44) in the blocking position (50) of the blocking element (44).

10. The interlocking device (40) according to any one of claims 1 to 9, **characterized in that** the blocking element (44) comprises two holes as a receptacle for a lockable securing element (46) in each case and two recesses (108) on the basic body (42), which are at least partially aligned with the holes (106) of the blocking element (44) in the blocking position (50) of the blocking element (44), wherein the securing elements (46), when inserted into the respective receptacle, hold the blocking element (44) in its blocking position.

11. The interlocking device (40) according to any one of claims 1 to 10, **characterized in that** the base body (42) is arranged on the transmitter (22) or on the receiver (24).

12. The interlocking device (40) according to claim 11, wherein the base body (42) is rigidly connectable to the transmitter (22) or the receiver (24).

13. The interlocking device (40) according to any one of claims 1 to 12, **characterized in that** the sensor device (16) comprises a plurality of optical transmitters (22) and corresponding optical receivers (24), wherein the blocking element (44) is arranged in its blocking position (48) in at least two beam paths (28) of the light pulses between the transmitters (22) and the receivers (24).

14. An access protection system (10) for safeguarding an access point (20) to a machine or installation (14) located in a safety area (12), the access protection system (10) comprising a sensor device (16) and a controller (18), the sensor device comprising an optical transmitter (22) and an optical receiver (24), wherein the optical transmitter (22) is configured to transmit a light pulse to the optical receiver (24), wherein the sensor device (16) is configured to generate a sensor signal based on the reception of the light pulse by the receiver (24), and wherein the controller (18) is configured to evaluate the sensor signal and to control the machine or installation (14) located in the safety area (12) based on the sensor signal, **characterized in that** the access protection system (10) further comprises an interlocking device (40) according to any one of claims 1 to 13.

15. A method (60) for safeguarding an access point (20) to a machine or installation (14) located in a safety area (12), the method (60) comprising the steps:
- Providing (62) a sensor device (16), wherein the sensor device (16) comprises an optical transmitter (22) and an optical receiver (24);
- Transmitting (64) a light pulse from the optical transmitter (22) to the optical receiver (24);
- Generating (66) a sensor signal by the sensor device (16) based on the reception of the light pulse by the receiver (24);
- Evaluating (68) the sensor signal by a controller (18); and
- Controlling (70) the machine or installation (14) located in the safety area (12) by the controller (18) based on the sensor signal;
**characterized by** the steps:
- Providing (72) an interlocking device (40) with a base body (42) and a blocking element (44) arranged thereon;
- Arranging (74) the blocking element (44) in a release position (48) in which the blocking element (44) is arranged outside a beam path (28) of the light pulse between the transmitter (22) and the receiver (24);
- Moving the blocking element from the release position to a blocking position in which the blocking element is located in a beam path of the light pulse between the transmitter and the receiver to block the reception of the light pulse; and
- Locking (78) the interlocking device (40) in the blocking position (50) by a lockable securing element (46),
wherein the interlocking device (40) comprises a receptacle for the securing element (46) and the securing element (46), when inserted into the receptacle, holds the blocking element (44) in its blocking position (50).

## Revendications

1. Dispositif de verrouillage (40) pour un dispositif capteur qui surveille un accès (20) à une machine ou une installation (14) disposée dans une zone de sécurité (12) et possède un émetteur optique (22) et un récepteur optique (24) qui peuvent être amenés en interaction par l'échange d'impulsions lumineuses et produisent ainsi un signal de capteur, le dispositif de verrouillage (40) présentant un corps de base (42) et un élément de blocage (44) disposé sur celui-ci, dans lequel, par rapport au corps de base (42), l'élément de blocage (44) peut être amené d'une position de libération (48) à une positon d'arrêt (50) dans laquelle l'élément de blocage (44) est disposé sur un trajet des rayons (28) des impulsions lumineuses entre l'émetteur (22) et le récepteur (24) et empêche leur interaction, **caractérisé en ce que** le dispositif de verrouillage (40) peut être arrêté dans la position d'arrêt (50), au moyen d'un élément de sécurisation verrouillable (46), le dispositif de verrouillage (40) présentant un logement pour l'élément de sécurisation verrouillable (46), et l'élément de sécurisation (46), une fois introduit dans le logement, retenant l'élément de blocage (44) dans sa position d'arrêt (50).

2. Dispositif de verrouillage (40) selon la revendication 1, **caractérisé en ce que** l'élément de blocage (44) peut être amené à pivoter mécaniquement par rapport au corps de base (42) de la position de libération (48) à la position d'arrêt (50) dans une direction de rotation (52) autour d'un axe de pivotement (54).

3. Dispositif de verrouillage (40) selon la revendication 2, **caractérisé en ce que** l'axe de pivotement (54) est disposé parallèlement ou verticalement au trajet des rayons (28) de l'impulsion lumineuse.

4. Dispositif de verrouillage (40) selon la revendication 2 ou 3, **caractérisé en ce que** l'élément de sécurisation (46) est réalisé pour relier le corps de base (42) et l'élément de blocage (44) l'un à l'autre dans la position d'arrêt (50) de manière verrouillée en rotation dans la direction de rotation (52).

5. Dispositif de verrouillage (40) selon l'une quelconque des revendications 2 à 4, **caractérisé en ce que** sur l'élément de blocage (44), une poignée (104) pour faire pivoter manuellement l'élément de blocage (44) autour de l'axe de pivotement (54) est prévue, la poignée (104) s'étendant en particulier de manière substantiellement parallèle à l'axe de pivotement (54), en particulier substantiellement le long de l'axe de pivotement (54).

6. Dispositif de verrouillage (40) selon l'une quelconque des revendications 2 à 5, **caractérisé en ce que** l'élément de blocage (44) est couplé au corps de base (42) par un élément faisant ressort disposé le long de l'axe de pivotement (54) et qui exerce dans la position de libération (48) et/ou dans la position d'arrêt (50) une force de ressort qui pousse l'élément de blocage (44) contre le corps de base (42).

7. Dispositif de verrouillage (40) selon l'une quelconque des revendications 1 à 6, **caractérisé en ce que** l'élément de blocage (44) peut être enclenché avec le corps de base dans la position de libération (48) et/ou dans la position d'arrêt (50), de préférence un premier creux (112) et un deuxième creux (120) étant prévus sur le corps de base (42), et l'élément de blocage (44) s'enclenchant dans la position de libération (48) dans le premier creux (112), et s'enclenchant dans la position d'arrêt (50) par une disposition dans le deuxième creux (120).

8. Dispositif de verrouillage (40) selon l'une quelconque des revendications 1 à 7, **caractérisé en ce que** le logement pour l'élément de sécurisation verrouillable (46) est configuré sous la forme d'un alésage (106) dans l'élément de blocage (44).

9. Dispositif de verrouillage (40) selon la revendication 8, **caractérisé en ce que** sur le corps de base (42), un évidement (108) est prévu qui, dans la position d'arrêt (50) de l'élément de blocage (44), est au moins partiellement aligné sur l'alésage (106) prévu dans l'élément de blocage (44).

10. Dispositif de verrouillage (40) selon l'une quelconque des revendications 1 à 9, **caractérisé en ce que** dans l'élément de blocage (44), deux alésages (106) sont prévus en tant que logement pour respectivement un élément de sécurisation verrouillable (46), et sur le corps de base (42), deux évidements (108) sont prévus qui, dans la position d'arrêt (50) de l'élément de blocage (44), sont alignés au moins partiellement sur les alésages (106) prévus dans l'élément de blocage (44), les éléments de sécurisation (46), une fois introduits dans le logement respectif, retenant l'élément de blocage (44) dans sa position d'arrêt.

11. Dispositif de verrouillage (40) selon l'une quelconque des revendications 1 à 10, **caractérisé en ce que** le corps de base (42) est disposé sur l'émetteur (22) ou sur le récepteur (24).

12. Dispositif de verrouillage (40) selon la revendication 11, **caractérisé en ce que** le corps de base (42) peut être relié rigidement à l'émetteur (22) ou au récepteur (24).

13. Dispositif de verrouillage (40) selon l'une quelconque des revendications 1 à 12, **caractérisé en ce que** le dispositif capteur (16) présente une pluralité d'émetteurs optiques (22) et de récepteurs optiques (24) correspondants, l'élément de blocage (44) étant disposé dans sa position d'arrêt (48) sur au moins deux trajets des rayons (28) des impulsions lumineuses entre les émetteurs (22) et les récepteurs (24).

14. Système de sécurisation d'accès (10) permettant de sécuriser un accès (20) à une machine ou à une installation (14) disposée dans une zone de sécurité (12), le système de sécurisation d'accès (10) présentant un dispositif capteur (16) et un dispositif de commande (18), le dispositif capteur présentant un émetteur optique (22) et un récepteur optique (24), l'émetteur optique (22) étant aménagé pour émettre une impulsion lumineuse vers le récepteur optique (24), le dispositif capteur (16) étant réalisé pour générer un signal de capteur sur la base de la réception de l'impulsion lumineuse par le récepteur (24), et le dispositif de commande (18) étant réalisé pour lire le signal de capteur et pour commander la machine ou l'installation (14) disposée dans la zone de sécurité (12) en tenant compte du signal de capteur, **caractérisé en ce que** le système de sécurisation d'accès (10) présente en outre un dispositif de verrouillage (40) selon l'une quelconque des revendications 1 à 13.

15. Procédé (60) permettant de sécuriser un accès (20) à une machine ou à une installation (14) disposée dans une zone de sécurité (12), le procédé (60) présentant les étapes suivantes consistant à :
- fournir (62) un dispositif capteur (16), le dispositif capteur (16) présentant un émetteur optique (22) et un récepteur optique (24) ;
- émettre (64) une impulsion lumineuse de l'émetteur optique (22) au récepteur optique (24) ;
- générer (66) un signal de capteur au moyen du dispositif capteur (16) sur la base de la réception de l'impulsion lumineuse par le récepteur (24) ;
- lire (68) le signal de capteur au moyen d'un dispositif de commande (18) ; et
- commander (70) la machine ou l'installation (14) disposée dans la zone de sécurité (12) au moyen du dispositif de commande (18) en tenant compte du signal de capteur,
**caractérisé par** les étapes suivantes consistant à :
- fournir (72) un dispositif de verrouillage (40) doté d'un corps de base (42) et d'un élément de blocage (44) disposé sur celui-ci ;
- disposer (74) l'élément de blocage (44) dans une position de libération (48) dans laquelle l'élément de blocage (44) est disposé en dehors d'un trajet des rayons (28) de l'impulsion lumineuse entre l'émetteur (22) et le récepteur (24) ;
- faire passer (76) l'élément de blocage (44) de la position de libération (48) à une position d'arrêt (50) dans laquelle l'élément de blocage (44) est disposé sur un trajet des rayons (28) de l'impulsion lumineuse entre l'émetteur (22) et le récepteur (24) afin de bloquer la réception de l'impulsion lumineuse ; et
- arrêter (78) le dispositif de verrouillage (40) dans la position d'arrêt (50) au moyen d'un élément de sécurisation verrouillable (46),
le dispositif de verrouillage (40) présentant un logement pour l'élément de sécurisation verrouillable (46), et l'élément de sécurisation verrouillable (46), une fois introduit dans le logement, retenant l'élément de blocage (44) dans sa position d'arrêt (50).
